# EUROPEAN PATENT APPLICATION

(11) **EP 4 760 911 A1**
(43) Date of publication of application: **17.06.2026**
(21) Application number: 25212633.9
(22) Date of filing: 31.10.2025
(51) Int. Cl.: H01M 50/209, H01M 50/224, H01M 50/249, H01M 50/258, H01M 50/291, H01M 50/293, H01M 50/242, H01M 50/30

(54) **BATTERY PACK**

(30) Priority: 11.12.2024 JP 2024217095
(71) Applicant: TOYOTA JIDOSHA KABUSHIKI KAISHA, Toyota-shi, Aichi-ken 471-8571 (JP)
(72) Inventor: SHIRAISHI, Kyoko, Toyota-shi, 471-8571 (JP)
(74) Representative: TBK

(57) **Abstract**

At least one first-through hole, which faces at least one first battery cell, is formed in a first restraining plate, which faces a second battery module, of a first battery module. At least one second-through-hole, which faces at least one second battery cell and faces a region where the first through-hole is not formed, is formed in a second restraining plate, which faces the first battery module, of the second battery module.

## Description

### BACKGROUND

### Technical Field

The present disclosure relates to a battery pack.

### Related Art

Japanese Patent No. 6920660 discloses a battery module having plural battery cells stacked in a predetermined direction, a pair of end plates between which all of first battery cells are sandwiched, and restraining plates connected to a pair of first end plates and positioned at the both sides of the battery cells, respectively.

In Japanese Patent No. 6920660, at the time when one battery cell overheats due to internal short-circuiting, there is the concern that high-temperature debris that is ejected from the interior of that battery cell to the exterior will stick to an adjacent battery cell. In this case, the temperature of the adjacent battery cell becomes high. In this way, in Japanese Patent No. 6920660, it is easy for thermal runaway to occur at plural battery cells when one of the battery cells overheats.

In view of the aforementioned, an object of the present disclosure is to provide a battery pack that, when one battery cell overheats, can suppress the occurrence of thermal runaway at the battery module that includes that battery cell.

### SUMMARY

A battery pack of a first aspect has: a first battery module having plural first battery cells that are stacked in a predetermined first direction and have first cell cases, a pair of first end plates sandwiching the first battery cells in the first direction, and a pair of first restraining plates connected to the pair of first end plates and positioned at respective sides of the first battery cells along a second direction that is orthogonal to the first direction; and a second battery module having plural second battery cells that are stacked in the first direction and have second cell cases, a pair of second end plates sandwiching the second battery cells in the first direction, and a pair of second restraining plates connected to the pair of second end plates and positioned at respective sides of the second battery cells along the second directio, wherein at least one first through-hole, which faces at least one of the first battery cells, is formed in the first restraining plate that faces the second battery module, and at least one second through-hole, which faces at least one of the second battery cells and faces a region of the first restraining plate in which the first through-hole is not formed, is formed in the second restraining plate that faces the first battery module.

In the battery pack of the first aspect, for example, when one of the first battery cells of the first battery module overheats, the first cell case expands. At this time, it is difficult for the region of the first cell case, which region faces the region of the first restraining plate in which the first through-hole is not formed, to deform as compared with the region of the first cell case which region faces the first through-hole. Therefore, in this case, there is a strong possibility that the region, which faces the first through-hole, of the first cell case will break. Accordingly, there is a strong possibility that high-temperature debris within that battery cell will be ejected out to the exterior from this broken portion. Moreover, the first through-hole faces a region, in which the second through-hole is not formed, of the second restraining plate of the second battery module. Therefore, there is little concern that the debris, which has been ejected from the first through-hole toward the second battery module side, will head via the second through-hole toward the second battery cell. Namely, when one of the first battery cells of the first battery module overheats, the ejection direction of the debris can be controlled such that the high-temperature debris of that first battery cell heads in a direction that is different than a first battery cell that is adjacent to that first cell and the second battery cell. Accordingly, the battery pack of the first aspect can, at the time when one battery cell overheats, suppress the occurrence of thermal runaway at the battery module that includes that battery cell.

In a battery pack of a second aspect, in the first aspect, the first cell cases are rectangular parallelopiped-shaped, the pair of first restraining plates and entireties of pairs of side surfaces of the first cell cases face one another in the second direction, the second cell cases are rectangular parallelopiped-shaped, and the pair of second restraining plates and entireties of pairs of side surfaces of the second cell cases face one another in the second direction.

In the battery pack of the second aspect, the first cell cases are rectangular parallelopiped-shaped, and the pair of first restraining plates and the entireties of the pairs of side surfaces of the first cell cases face one another in the second direction respectively. Therefore, even in a case in which a region of the pair of side surfaces of a first cell case breaks, the ejection direction of the debris can be controlled such that the high-temperature debris heads in a direction that is different than the first battery cell that is adjacent to that first cell and the second battery cell. Similarly, the second cell cases are rectangular parallelopiped-shaped, and the pair of second restraining plates and the entireties of the pairs of side surfaces of the second cell cases face one another in the second direction respectively. Therefore, even in a case in which a region of the pair of side surfaces of a second cell case breaks, the ejection direction of the debris can be controlled such that the high-temperature debris heads in a direction that is different than the second battery cell that is adjacent to that second cell and the first battery cell.

In a battery pack of a third aspect, in the second aspect, the first battery module has a pair of first cover members that are made of resin and are respectively positioned between the pair of first restraining plates that are made of metal and the pairs of side surfaces of the first cell cases, and first opening portions, which face the first through-holes of the first restraining plates, are formed in the first cover members.

In the battery pack of the third aspect, for example, when high-temperature debris is ejected from the first cell case of one first battery cell, the first cover member that is made of resin can suppress the occurrence of short-circuiting between this first battery cell and another first battery cell via the debris and the first restraining plate that is made of metal.
Moreover, because the first restraining plate is made of metal, the mechanical strength thereof is high. Therefore, the region, which does not face the first opening portion, of the first cell case deforming greatly can be suppressed by the first cover member and the first restraining plate.

In a battery pack of a fourth aspect, in the third aspect, the pair of first cover members have pairs of first nipping portions that nip the first cell cases from a third direction that is orthogonal to the first direction and the second direction.

In the battery pack of the fourth aspect, the first cover members have the pairs of first nipping portions that nip the first cell cases in from the third direction. Therefore, the first restraining plates easy control deformation of the first cell cases.

In a battery pack of a fifth aspect, in the third aspect or the fourth aspect, the first through-holes and the first opening portions that face one another have identical shapes.

In the battery pack of the fifth aspect, the first through-holes and the first opening portions that face one another are the identical shapes. Therefore, for example, when high-temperature debris is ejected from the first cell case of one of the first battery cells, there is a strong possibility that this debris will head, via the first-through hole and the first opening portion, toward a region of the second restraining plate at which region the second through-hole is not formed.

In a battery pack of a sixth aspect, in the second aspect, the second battery module has a pair of second cover members that are made of resin and are respectively positioned between the pair of second restraining plates that are made of metal and the pairs of side surfaces of the second cell cases, and second opening portions, which face the second through-holes of the second restraining plates, are formed in the second cover members.

In accordance with the battery pack of the sixth aspect, for example, when high-temperature debris is ejected from the second cell case of one second battery cell, the second cover member that is made of resin can suppress the occurrence of short-circuiting between this second battery cell and another second battery cell via the debris and the second restraining plate that is made of metal. Moreover, because the second restraining plate is made of metal, the mechanical strength thereof is high. Therefore, the region, which does not face the second opening portion, of the second cell case deforming greatly can be suppressed by the second cover member and the second restraining plate.

In a battery pack of a seventh aspect, in the sixth aspect, the pair of second cover members have pairs of second nipping portions that nip the second cell cases in from a third direction that is orthogonal to the first direction and the second direction.

In the battery pack of the seventh aspect, the second cover members have the pairs of second nipping portions that nip the second cell cases from the third direction. Therefore, the second restraining plates easy control deformation of the second cell cases.

In a battery pack of an eighth aspect, in the sixth aspect or the seventh aspect, the second through-holes and the second opening portions that face one another have identical shapes.

In accordance with the battery pack of the eighth aspect, the second through-holes and the second opening portions that face one another are the identical shapes. Therefore, for example, when high-temperature debris is ejected from the second cell case of one of the second battery cells, there is a strong possibility that this debris will head, via the second-through hole and the second opening portion, toward a region of the first restraining plate at which region the first through-hole is not formed.

As described above, the battery pack relating to the present disclosure has the excellent effect of, when one battery cell overheats, being able to suppress the occurrence of thermal runaway at the battery module that contains that battery cell.

### BRIEF DESCRIPTION OF THE DRAWINGS

Exemplary embodiments of the present disclosure will be described in detail based on the following figures, wherein:
Fig. 1 is a cross-sectional view cut at the vehicle transverse direction center of a vehicle in which a battery pack relating to a first embodiment is installed;
Fig. 2 is a schematic, exploded perspective view of the battery pack;
Fig. 3 is a schematic plan view of a lower case of a battery case, a first battery module and a second battery module;
Fig. 4 is a schematic side view of a right-side restraining plate;
Fig. 5 is a schematic side view of a left-side restraining plate;
Fig. 6 is a schematic side view of a right-side cover member;
Fig. 7 is a schematic side view of a left-side cover member;
Fig. 8 is a perspective view of the first battery module;
Fig. 9 is a schematic sectional view along arrow line 9-9 of Fig. 3;
Fig. 10 is a perspective view of the first battery module of a battery pack relating to a second embodiment;
Fig. 11 is a schematic side view of the right-side restraining plate;
Fig. 12 is a schematic side view of the left-side restraining plate;
Fig. 13 is a schematic side view of the right-side cover member;
Fig. 14 is a schematic side view of the left-side cover member;
Fig. 15 is a schematic side view of the right-side restraining plate relating to a third embodiment;
Fig. 16 is a schematic side view of the left-side restraining plate;
Fig. 17 is a schematic side view of the right-side cover member;
Fig. 18 is a schematic side view of the left-side cover member;
Fig. 19 is a schematic side view of the right-side restraining plate relating to a fourth embodiment;
Fig. 20 is a schematic side view of the left-side restraining plate;
Fig. 21 is a schematic side view of the right-side cover member; and
Fig. 22 is a schematic side view of the left-side cover member.

### DETAILED DESCRIPTION

A battery pack relating to a first embodiment is described hereinafter with reference to the appended drawings. Note that arrow UP, arrow FR and arrow LH in the respective drawings indicate the upper side in the vehicle vertical direction (a third direction), the front side in the vehicle longitudinal direction (a first direction), and the left side in the vehicle left-right direction (a second direction).

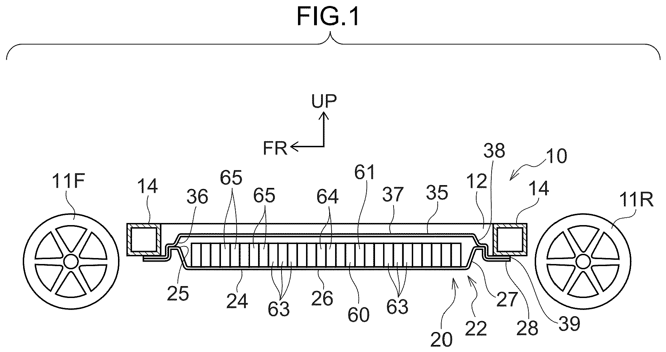

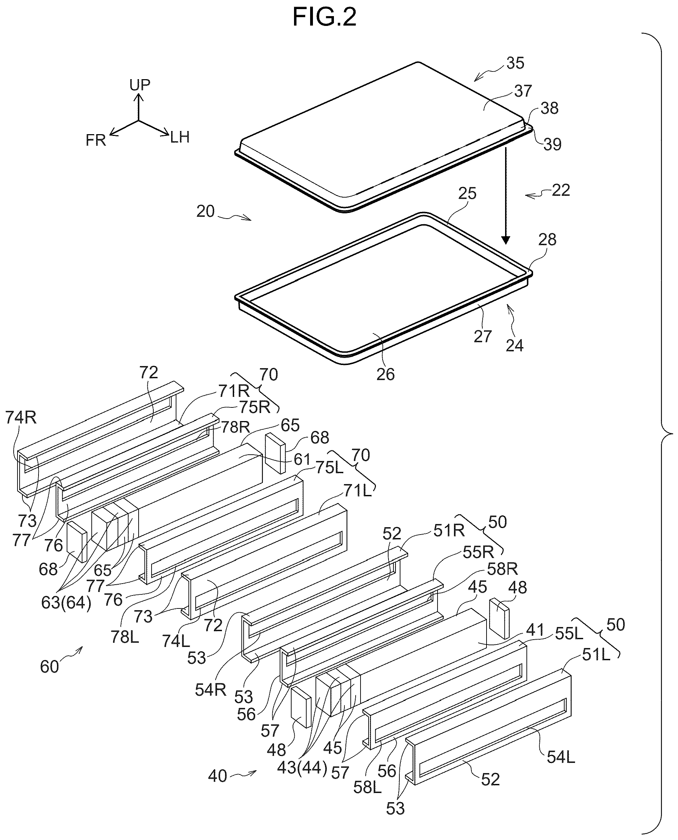

As illustrated in Fig. 1 and Fig. 2, a battery pack 20 of the present embodiment is installed in a vehicle (electric vehicle) 10. The vehicle 10 of the present embodiment is a battery electric vehicle (BEV).

The vehicle 10 includes a pair of left and right front wheels 11F, a pair of left and right rear wheels 11R, a pair of left and right rockers 12 that are some vehicle body frame members and extend in the vehicle longitudinal direction, and a pair of front and rear cross members 14 that are some vehicle body frame members and that extend in the vehicle transverse direction (the left-right direction) and whose both end portions are fixed to the left and right rockers 12.

The battery pack 20 of the present embodiment includes a battery case 22, a battery module (first battery module) 40, and a battery module (second battery module) 60. The electric power of the battery pack 20 (battery cells 43) is, for example, supplied to an electric motor (not illustrated) that applies driving force to the front wheels 11F and the rear wheels 11R.

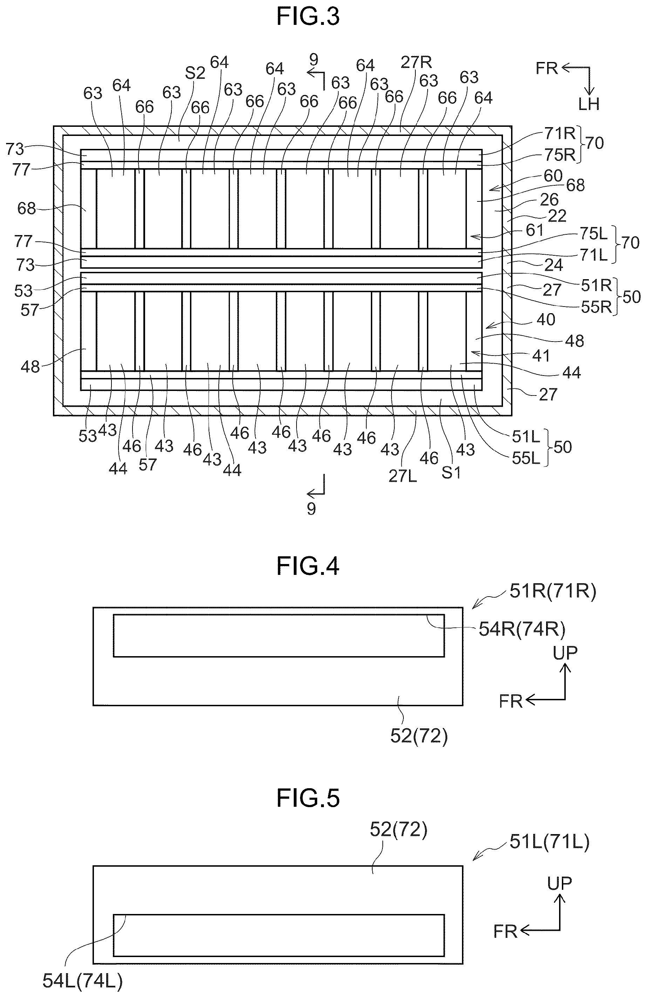

As illustrated in Fig. 2 and Fig. 3, the battery case 22 includes a lower case 24 and an upper case 35.

The lower case 24 is a hollow body at which an opening portion 25 is formed at the upper surface thereof. The lower case 24 includes a bottom plate portion 26, a peripheral wall portion 27 and an outer peripheral flange 28. The planar shape of the peripheral wall portion 27 is annular, and the lower end portion of the peripheral wall portion 27 is connected to the outer peripheral edge portion of the bottom plate portion 26. The planar shape of the outer peripheral flange 28 is annular, and the inner peripheral edge portion of the outer peripheral flange 28 is connected to the upper end portion of the peripheral wall portion 27.

The upper case 35 is a hollow body at which an opening portion 36 is formed at the lower surface thereof. The upper case 35 has a ceiling plate portion 37, a peripheral wall portion 38 and an outer peripheral flange 39. The planar shape of the peripheral wall portion 38 is annular, and the upper end portion of the peripheral wall portion 38 is connected to the outer peripheral edge portion of the ceiling plate portion 37. The planar shape of the outer peripheral flange 39 is annular, and the inner peripheral edge portion of the outer peripheral flange 39 is connected to the lower end portion of the peripheral wall portion 38.

As illustrated in Fig. 2 and Fig. 3, the battery module 40 and the battery module 60 are provided at the interior of the lower case 24. The battery module 40 and the battery module 60 are lined-up in the left-right direction. In further detail, the battery module 60 is positioned further toward the right side than the battery module 40.

The battery module 40 includes a battery stack (first battery stack) 41, end plates (first end plates) 48 and restraining members 50.

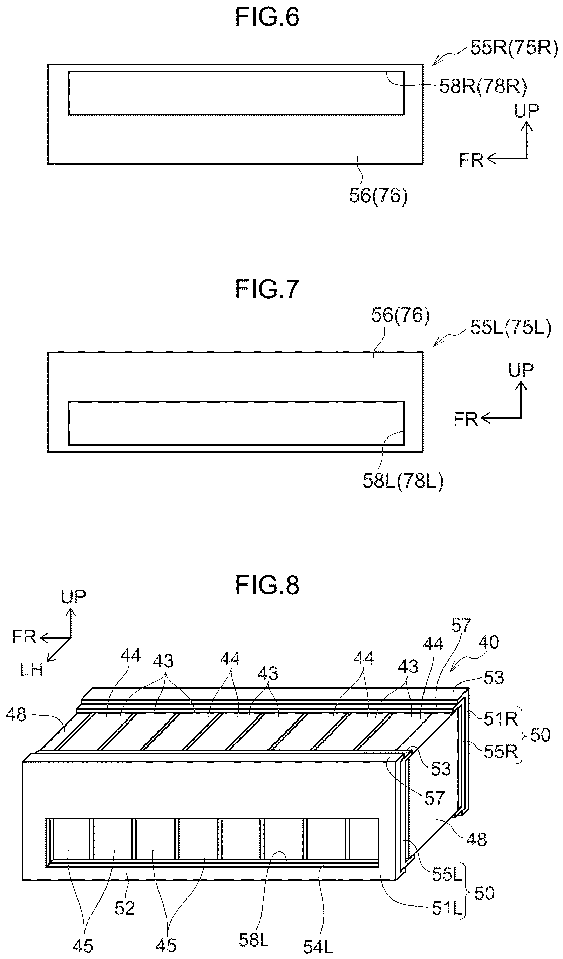

As illustrated in Fig. 3, the battery stack 41 that extends in the longitudinal direction as seen in a plan view includes the plural battery cells (first battery cells) 43, and plural insulating members 46 positioned between the battery cells 43 that are adjacent to one another. Note that, in Fig. 3 and Fig. 8, for convenience, only eight of the battery cells 43 are drawn, but in actuality, the battery stack 41 includes more than eight of the battery cells 43. A cell case (first cell case) 44, which is made of metal and structures the outer shape of the battery cell 43 that is a lithium ion battery, is rectangular parallelopiped-shaped. The outer shape of the cell case 44 is substantially rectangular parallelopiped-shaped. The cell case 44 includes a pair of left and right side surfaces 45. A positive electrode, a negative electrode and a release valve (none of which are illustrated) are provided in the cell case 44.

The battery module 40 includes the pair of front and rear end plates 48. As illustrated in Fig. 3 and Fig. 8, the front-side end plate 48 is positioned directly in front of the battery cell 43 that is furthest toward the front side, and the rear-side end plate 48 is positioned directly in front of the battery cells 43 that is furthest toward the rear side.

As illustrated in Fig. 2, Fig. 3 and Fig. 8, the pair of left and right restraining members 50 have left-right symmetry with respect to one another. The respective restraining members 50 include restraining plates (first restraining plates) 51L, 51R made of metal, and cover members (first cover members) 55L, 55R made of a resin.

The pair of left and right restraining plates 51L, 51R are integrally molded parts that are U-shaped in cross-section. The restraining plates 51L, 51R can be manufactured by press molding metal plates for example. The restraining plates 51L, 51R include a base plate portion 52 that is shaped as a flat plate and is orthogonal to the left-right direction, and a pair of nipping portions 53 extending horizontally from the upper and lower both edge portions of the base plate portion 52. The shape, as seen in a side view, of the base plate portion 52 is a rectangular shape whose front-rear dimension is greater than the vertical dimension thereof. As illustrated in Fig. 4, a through-hole (first through-hole) 54R, which is shaped as a rectangle whose front-rear dimension is greater than the vertical dimension thereof, is formed in the upper half portion of the base plate portion 52 of the restraining plate 51R. As illustrated in Fig. 5, a through-hole (first through-hole) 54L, which is shaped as a rectangle whose front-rear dimension is greater than the vertical dimension thereof, is formed in the lower half portion of the base plate portion 52 of the restraining plate 51L. The shapes, as seen in a side view, of the through-hole 54L and the through-hole 54R are the same. The restraining plate 51L and the restraining plate 51R have left-right symmetry other than the through-holes 54L, 54R.

The pair of left and right cover members 55L, 55R are integrally molded parts that are U-shaped in cross-section. The cover members 55L, 55R include a base plate portion 56 that is shaped as a flat plate and is orthogonal to the left-right direction, and a pair of nipping portions (first nipping portions) 57 extending horizontally from the upper and lower both edge portions of the base plate portion 56. The shape, as seen in a side view, of the base plate portion 56 is a rectangular shape whose front-rear dimension is greater than the vertical dimension thereof. As illustrated in Fig. 6, an opening portion (first opening portion) 58R, which is shaped as a rectangle whose front-rear dimension is greater than the vertical dimension thereof, is formed in the upper half portion of the base plate portion 56 of the cover member 55R. As illustrated in Fig. 7, an opening portion (first opening portion) 58L, which is shaped as a rectangle whose front-rear dimension is greater than the vertical dimension thereof, is formed in the lower half portion of the base plate portion 56 of the cover member 55L. The shape, as seen in a side view, of the opening portion 58R is the same as that of the through-hole 54R. The shape, as seen in a side view, of the opening portion 58L is the same as that of the through-hole 54L. The cover member 55L and the cover member 55R have left-right symmetry other than the opening portions 58L, 58R.

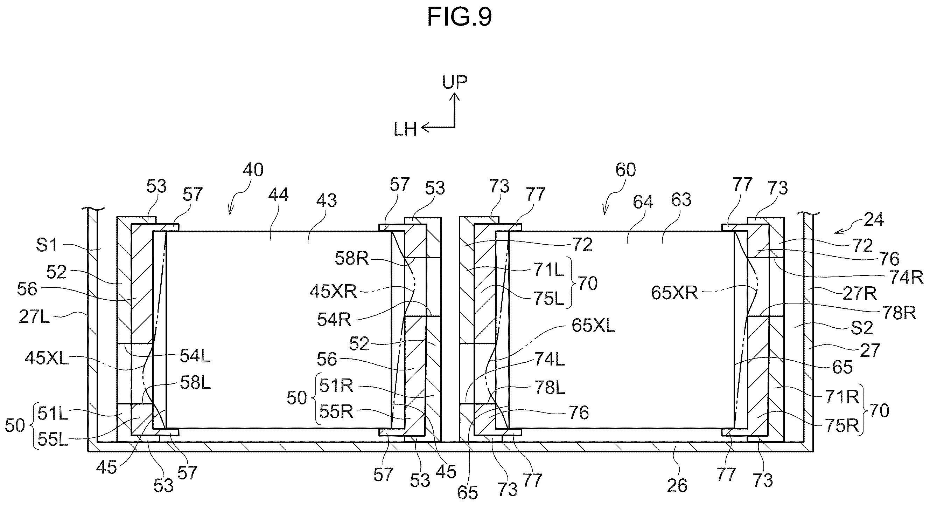

As illustrated in Fig. 9, the vertical dimensions of the cover members 55L, 55R, and the distances between the facing surfaces of the upper and lower nipping portions 53 of the restraining plates 51L, 51R (the distances in the vertical direction) are substantially the same. The restraining plate 51L and the cover member 55L are fixed together, and the restraining plate 51R and the cover member 55R are fixed together, in the state in which the upper and lower nipping portions 57 nip the upper and lower nipping portions 53 therebetween and the base plate portion 52 contacts the base plate portion 56. Due thereto, the entire (outer peripheral edge of the) through-hole 54L of the restraining plate 51L and the entire (outer peripheral edge of the) opening portion 58L of the cover member 55L face one another in the left-right direction, and the (entire outer peripheral edge of the) through-hole 54R of the restraining plate 51R and the (entire outer peripheral edge of the) opening portion 58R of the cover member 55R face one another in the left-right direction.

Note that the gaps between the respective base plate portions 56 and the left and right side surfaces 45 of the cell cases 44 of the respective battery cells 43 are drawn large in Fig. 9, but in actuality, the gaps between the respective base plate portions 56 and the respective side surfaces 45 are very small. This point is the same for the relationships between respective base plate portions 76 of the battery module 60 and left and right side surfaces 65 of cell cases 64 of respective battery cells 63 that are described later.

Note that the restraining plate 51L and the cover member 55L may be fixed together by an adhesive or fastening members. Further, the restraining plate 51R and the cover member 55R may be fixed together by an adhesive or fastening members. For example, bolts and nuts are included as fastening members. Moreover, by setting the distances between the facing surfaces of the upper and lower nipping portions 53 of the restraining plates 51L, 51R that are in free states to be smaller than the vertical dimensions of the cover members 55L, 55R that are in free states, the restraining plate 51L and the cover member 55L may be fixed together, and the restraining plate 51R and the cover member 55R may be fixed together, due to the upper and lower nipping portions 53 of the restraining plates 51L, 51R nipping the cover members 55L, 55R while elastically deforming. These points are the same also for restraining plates 71L, 71R and cover members 75L, 75R that are described later.

Moreover, the front and rear both end portions of the restraining plate 51L are fixed to the left end portions of the front and rear end plates 48 respectively, and the front and rear both end portions of the restraining plate 51R are fixed to the right end portions of the front and rear end plates 48 respectively. Due thereto, the front-rear lengths of the restraining plates 51L, 51R are shorter than in free states. Namely, the front and rear end plates 48 are pulled in directions of approaching one another by the restraining plates 51L, 51R, and due thereto, the front and rear end plates 48 sandwich the battery stack 41 in from the front and the rear. When the left and right restraining members 50 are made integral with the battery stack 41 and the end plates 48 in this way, as illustrated in Fig. 8 and Fig. 9, the lower portions of the side surfaces 45 at the left sides of the cell cases 44 of the respective battery cells 43 are exposed at the left side via the through-hole 54L of the restraining plate 51L and the opening portion 58L of the cover member 55L. Moreover, as illustrated in Fig. 9, the upper portions of the side surfaces 45 at the right sides of the cell cases 44 of the respective battery cells 43 are exposed at the right side via the through-hole 54R of the restraining plate 51R and the opening portion 58R of the cover member 55R.

Further, the battery module 40 includes a large number of bus bars (not illustrated) that connect the positive electrodes and the negative electrodes of the respective battery cells 43, and coolers (not illustrated).

As illustrated in Fig. 2 and Fig. 3, the battery module 60 includes a battery stack (second battery stack) 61, a pair of front and rear end plates (second end plates) 68 and a pair of left and right restraining members 70.

The battery stack 61 has the same structure as the battery stack 41. Namely, the battery stack 61 includes the plural battery cells (second battery cells) 63 corresponding to the battery cells 43, and plural insulating members 66 positioned between the battery cells 63 that are adjacent to one another. The battery cells 63 have the same structures as the battery cells 43, and include the cell cases (second cell cases) 64 that are made of metal and correspond to the cell cases 44. The cell case 64 includes the pair of left and right side surfaces 65 (see Fig. 1, Fig. 2 and Fig. 9). The pair of front and rear end plates 68 correspond to the end plates 48.

The pair of left and right restraining members 70 correspond to the restraining members 50, and have left-right symmetry with respect to one another. The restraining member 70 includes the restraining plate (second restraining plate) 71L made of metal and having the same structure as the restraining plate 51L, the restraining plate (second restraining plate) 71R made of metal and having the same structure as the restraining plate 51R, the cover member (second cover member) 75L made of a resin and having the same structure as the cover member 55L, and the cover member (second cover member) 75R made of a resin and having the same structure as the cover member 55R.

The restraining plates 71L, 71R include a base plate portion 72 corresponding to the base plate portion 52, and a pair of nipping portions 73 corresponding to the nipping portions 53. As illustrated in Fig. 4, a through-hole (second through-hole) 74R corresponding to the through-hole 54R is formed in the upper half portion of the base plate portion 72 of the restraining plate 71R. As illustrated in Fig. 5, a through-hole (second through-hole) 74L corresponding to the through-hole 54L is formed in the lower half portion of the base plate portion 72 of the restraining plate 71L.

The cover members 75L, 75R include the base plate portion 76 corresponding to the base plate portion 56, and nipping portions (second nipping portions) 77 corresponding to the nipping portions 57. As illustrated in Fig. 6, an opening portion (second opening portion) 78R corresponding to the opening portion 58R is formed in the upper half portion of the base plate portion 76 of the cover member 75R. As illustrated in Fig. 7, an opening portion (second opening portion) 78L corresponding to the opening portion 58L is formed in the lower half portion of the base plate portion 76 of the cover member 75L. The shape, as seen in a side view, of the opening portion 78R is the same as that of the through-hole 74R, and the shape, as seen in a side view, of the opening portion 78L is the same as that of the through-hole 74L.

Moreover, as illustrated in Fig. 9, in the same way as in the battery module 40, the restraining plate 71L and the cover member 75L are fixed together, and the restraining plate 71R and the cover member 75R are fixed together, in the state in which the upper and lower nipping portions 73 nip the upper and lower nipping portions 77 therebetween and the base plate portions 72 contact the base plate portions 76. Due thereto, as illustrated in Fig. 9, the entire outer peripheral edge of the through-hole 74L of the restraining plate 71L and the entire outer peripheral edge of the opening portion 78L of the cover member 75L face one another in the left-right direction, and the entire outer peripheral edge of the through-hole 74R of the restraining plate 71R and the entire outer peripheral edge of the opening portion 78R of the cover member 75R face one another in the left-right direction.

Moreover, as illustrated in Fig. 3, the front and rear both end portions of the restraining plate 71L are fixed to the left end portions of the front and rear end plates 68 respectively, and the front and rear both end portions of the restraining plate 71R are fixed to the right end portions of the front and rear end plates 68 respectively. Due thereto, the front-rear lengths of the restraining plate 71L and the restraining plate 71R are shorter than in free states. Namely, the front and rear end plates 68 are pulled in directions of approaching one another by the restraining plate 71L and the restraining plate 71R, and due thereto, the front and rear end plates 68 sandwich the battery stack 61 in from the front and the rear. When the left and right restraining members 70 are made integral with the battery stack 61 and the end plates 68 in this way, as illustrated in Fig. 9, the lower portions of the side surfaces 65 at the left sides of the cell cases 64 of the respective battery cells 63 are exposed at the left side via the through-hole 74L of the restraining plate 71L and the opening portion 78L of the cover member 75L. Moreover, the upper portions of the side surfaces 65 at the right sides of the cell cases 64 of the respective battery cells 63 are exposed at the right side via the through-hole 74R of the restraining plate 71R and the opening portion 78R of the cover member 75R.

Further, the battery module 60 includes a large number of bus bars (not illustrated) that connect the positive electrodes and the negative electrodes of the respective battery cells 63, and coolers (not illustrated).

As illustrated in Fig. 3 and Fig. 9, the battery module 40 and the battery module 60 are accommodated in the interior of the lower case 24, and the battery module 40 and the battery module 60 are fixed to the bottom plate portion 26. At this time, as illustrated in Fig. 3 and Fig. 9, an gap S1 is formed between the left-side restraining plate 51L of the battery module 40 and a left side wall 27L of the peripheral wall portion 27 of the lower case 24, and an gap S2 is formed between the right-side restraining plate 71R of the battery module 60 and a right side wall 27R of the peripheral wall portion 27 of the lower case 24. Further, the through-hole 54R of the right-side restraining plate 51R and the opening portion 58R of the right-side cover member 55R face, in the left-right direction, a region that is further toward the upper side than the region where the through-hole 74L is formed in the left-side restraining plate 71L. Moreover, the through-hole 74L of the left-side restraining plate 71L and the opening portion 78L of the left-side cover member 75L face, in the left-right direction, a region that is further toward the lower side than the region where the through-hole 54R is formed in the right-side restraining plate 51R.

The outer peripheral flange 39 of the upper case 35 is placed, via a sealing material (not illustrated), on the entire upper surface of the outer peripheral flange 28 of the lower case 24 that accommodates the battery module 40 and the battery module 60, and the outer peripheral flange 28 and the outer peripheral flange 39 are fixed together. The battery pack 20 is thereby completed.

Moreover, as illustrated in Fig. 1, the battery case 22 of the completed battery pack 20 is supported by the rockers 12 and the cross members 14. Namely, the outer peripheral flange 39 is fixed to the lower surfaces of the respective rockers 12 and the respective cross members 14 in a state in which the ceiling plate portion 37 and the peripheral wall portion 38 of the upper case 35 are positioned in the space surrounded by the rockers 12 and the cross members 14.

### (Operation and Effects)

### Operation and effects of the first embodiment are described next.

For example, when one of the battery cells 43 of the battery module 40 overheats, the cell case 44 of that battery cell 43 expands. At this time, as illustrated in Fig. 9, deformation of the region, which faces the region of the cover member 55R in which the opening portion 58R is not formed, of the right-side side surface 45 of this cell case 44 is suppressed by that region of the cover member 55R. Therefore, it is difficult for that region of the right-side side surface 45 to deform as compared with the region, which faces the opening portion 58R of the cover member 55R, of the right-side side surface 45. In other words, it is easy for the upper portion of the right-side side surface 45 of the cell case 44 that faces the opening portion 58R of the cover member 55R to deform, as compared with the regions other than this of the right-side side surface 45 of the cell case 44. Therefore, as illustrated by the imaginary line in Fig. 9, the right-side side surface 45 of the cell case 44 of this battery cell 43 deforms toward the outer side, and, in particular, region 45XR, which faces the opening portion 58R, of the side surface 45 deforms greatly. Therefore, the region 45XR of the right-side side surface 45 breaks, and high-temperature debris within this cell case 44 heads toward the right side from the broken portion of the region 45XR. Moreover, the entire outer peripheral edge of the through-hole 54R of the restraining plate 51R and the entire outer peripheral edge of the opening portion 58R of the cover member 55R face one another in the left-right direction. Therefore, there is a strong possibility that this debris will be ejected toward the right side via the opening portion 58R of the cover member 55R and the through-hole 54R of the restraining plate 51R. Thus, this debris heads toward the left-side restraining member 70 of the battery module 60. However, the through-hole 74L of the restraining plate 71L of the left-side restraining member 70 is formed at the lower portion of the base plate portion 72, and the opening portion 78L of the cover member 75L is formed at the lower portion of the base plate portion 76. Namely, the through-hole 74L and the opening portion 78L do not face, in the left-right direction, the opening portion 58R of the cover member 55R and the through-hole 54R of the restraining plate 51R of the right-side restraining member 50 of the battery module 40. Therefore, there is a strong possibility that the debris will stick to the upper portion, in which the through-hole 74L is not formed, of the restraining plate 71L of the left-side restraining member 70. In other words, there is little concern that the high-temperature debris, which is ejected toward the right side from the broken portion of the region 45XR of the above-described battery cell 43, will stick to the battery cell 43 that is adjacent to that battery cell 43. Note that, for example, the internal electrodes (collector terminals), electrolyte liquids, and gasses of the battery cells 43, 63 are included as debris in the present specification.

Further, as illustrated by the imaginary line in Fig. 9, the left-side side surface 45 of the cell case 44 of this battery cell 43 deforms toward the outer side, and, in particular, region 45XL (see Fig. 9), which faces the opening portion 58L of the left-side cover member 55L, of the side surface 45 deforms greatly. Therefore, the region 45XL of the left-side side surface 45 breaks, and high-temperature debris within this cell case 44 heads toward the left side from the broken portion of the region 45XL. Moreover, the entire outer peripheral edge of the through-hole 54L of the restraining plate 51L and the entire outer peripheral edge of the opening portion 58L of the cover member 55L face one another in the left-right direction. Therefore, there is a strong possibility that this debris will be ejected toward the left side via the opening portion 58L of the cover member 55L and the through-hole 54L of the restraining plate 51L. Thus, there is a strong possibility that this debris heads toward the left side wall 27L of the peripheral wall portion 27 of the lower case 24, and the debris will stick to the left side wall 27L. In other words, there is little concern that the high-temperature debris, which is ejected toward the left side from the broken portion of the region 45XL of the above-described battery cell 43, will stick to the battery cell 43 that is adjacent to that battery cell 43.

In this way, when any of the battery cells 43 of the battery module 40 overheats, the battery pack 20 can control the ejection direction of the debris from the battery cell 43 such that the high-temperature debris of that battery cell 43 heads in a direction that is different than the battery cell 43 that is adjacent to that battery cell 43 and the battery cell 63 of the battery module 60. In other words, when any of the battery cells 43 overheats, for example, there is little concern that the connected portion of the side surface 45 and the upper surface, or the connected portion of the side surface 45 and the lower surface, of the cell case 44 of that battery cell 43 will break, and that the high-temperature debris ejected from that broken portion will stick to the adjacent battery cell 43. Accordingly, when one of the battery cells 43 of the battery module 40 overheats, the battery pack 20 can suppress the occurrence of thermal runaway at the battery module 40.

Note that, when one of the battery cells 63 of the battery module 60 overheats, the cell case 64 of that battery cell 63 expands. In this case, the left-side side surface 65 of the cell case 64 of this battery cell 63 deforms toward the outer side, and, in particular, region 65XL, which faces the opening portion 78L, of the side surface 65 deforms greatly. Therefore, the region 65XL of the left-side side surface 65 breaks, and high-temperature debris within this cell case 64 heads toward the left side from the broken portion 65XL. Moreover, the entire outer peripheral edge of the through-hole 74L of the restraining plate 71L and the entire outer peripheral edge of the opening portion 78L of the cover member 75L face one another in the left-right direction. Therefore, there is a strong possibility that this debris will be ejected toward the left side via the opening portion 78L of the cover member 75L and the through-hole 74L of the restraining plate 71L. Thus, this debris heads toward the right-side restraining member 50 of the battery module 40. However, the through-hole 54R of the restraining plate 51R of the right-side restraining member 50 is formed in the upper portion of the base plate portion 52, and the opening portion 58R of the cover member 55R is formed in the upper portion of the base plate portion 56. Namely, the through-hole 54R and the opening portion 58R do not face, in the left-right direction, the opening portion 78L of the cover member 75L and the through-hole 74L of the restraining plate 71L of the left-side restraining member 70 of the battery module 60. Therefore, there is a strong possibility that the debris will stick to the lower portion, in which the through-hole 54R is not formed, of the restraining plate 51R of the right-side restraining member 50. In other words, there is little concern that the high-temperature debris, which is ejected toward the left side from the broken portion 65XL of the battery cell 63, will stick to the battery cell 63 that is adjacent to that battery cell 63.

Further, the right-side side surface 65 of the cell case 64 of this battery cell 63 deforms toward the outer side, and in particular, the region, which faces the opening portion 78R of the right-side cover member 75, of the side surface 65 greatly deforms. Therefore, region 65XR of the right-side side surface 65 breaks, and high-temperature debris within this cell case 64 heads toward the right side from the broken portion 65XR. Moreover, the entire outer peripheral edge of the through-hole 74R of the restraining plate 71R and the entire outer peripheral edge of the opening portion 78R of the cover member 75R face one another in the left-right direction. Therefore, there is a strong possibility that this debris will be ejected toward the right side via the opening portion 78R of the cover member 75R and the through-hole 74R of the restraining plate 71R. Thus, there is a strong possibility that this debris heads toward the right side wall 27R of the peripheral wall portion 27 of the lower case 24, and that the debris will stick to the right side wall 27R. In other words, there is little concern that the high-temperature debris, which is ejected toward the right side from the broken portion of the above-described battery cell 63, will stick to the battery cell 63 that is adjacent to that battery cell 63.

In this way, when any of the battery cells 63 of the battery module 60 overheats, the battery pack 20 can control the ejection direction of the debris from the battery cell 63 such that the high-temperature debris of that battery cell 63 heads in a direction that is different than the battery cell 63 that is adjacent to that battery cell 63 and the battery cell 43 of the battery module 40. In other words, when any of the battery cells 63 overheats, for example, there is little concern that the connected portion of the side surface 65 and the upper surface, or the connected portion of the side surface 65 and the lower surface, of that cell case 64 will break and that the high-temperature debris ejected from that broken portion will stick to the adjacent battery cell 63. Accordingly, when one of the battery cells 63 of the battery module 60 overheats, the battery pack 20 can suppress the occurrence of thermal runaway at the battery module 60.

Moreover, the cell case 44 of the battery cell 43 of the battery module 40 is rectangular parallelopiped-shaped, and the pair of restraining members 50 face, in the left-right direction, the entireties of the pair of side surfaces 45 of the cell case 44, respectively. Therefore, even in a case in which any region of the pair of side surfaces 45 of the cell case 44 of the battery cell 43 breaks, the ejection direction of the debris can be controlled such that the high-temperature debris heads in a direction that is different than the battery cell 43 that is adjacent to that battery cell 43 and the battery cell 63. Similarly, the cell case 64 of the battery cell 63 of the battery module 60 is rectangular parallelopiped-shaped, and the pair of restraining members 70 face, in the left-right direction, the entireties of the pair of side surfaces 65 of the cell case 64, respectively. Therefore, even in a case in which any region of the pair of side surfaces 65 of the cell case 64 of the battery cell 63 breaks, the ejection direction of the debris can be controlled such that the high-temperature debris heads in a direction that is different than the battery cell 63 that is adjacent to that battery cell 63 and the battery cell 43.

Moreover, the cover members 55L, 55R that face the side surfaces 45 of the battery cells 43, and the cover members 75L, 75R that face the side surfaces 65 of the battery cells 63, are made of resin and are electrically insulating. Therefore, for example, when debris that is ejected from the battery cell 43, and that is charged, contacts the cover member 55L, there is little concern that short-circuiting will occur between that battery cell 43 and another battery cell 43 via the cover member 55L and the debris. Further, for example, when debris that is ejected from the battery cell 63, and that is charged, contacts the cover member 75L, there is little concern that short-circuiting will occur between the battery cell 63 and another battery cell 63 via the cover member 75L and the debris.

The mechanical strength of the restraining plates 51L, 51R that are made of metal is high. Therefore, the regions, which do not face the opening portions 58L, 58R, of the side surfaces 45 of the cell case 44 deforming greatly can be suppressed by the cover members 55L, 55R and the restraining plates 51L, 51R. Moreover, the pairs of nipping portions 57, which are restrained from above and below by the pairs of nipping portions 53 of the restraining plates 51L, 51R, nip the respective battery cells 43 in from above and below, and the base plate portions 56 of the cover members 55L, 55R are reinforced by the base plate portions 52 of the restraining plates 51L, 51R. Therefore, when one of the battery cells 43 thermally expands, there is little concern that the upper surface or the lower surface of the cell case 44 will deform greatly and the upper surface or the lower surface will break, and that the connected portions of the upper surface or the lower surface with the side surfaces 45 will break.

Similarly, the mechanical strength of the restraining plates 71L, 71R that are made of metal is high. The pairs of nipping portions 77, which are restrained from above and below by the pairs of nipping portions 73 of the restraining plates 71L, 71R, nip the respective battery cells 63 in from above and below, and the base plate portions 76 of the cover members 75L, 75R are reinforced by the base plate portions 72 of the restraining plates 71L, 71R. Therefore, when one of the battery cells 63 thermally expands, there is little concern that the upper surface or the lower surface of the cell case 64 will deform greatly and the upper surface or the lower surface will break, and that the connected portions of the upper surface or the lower surface with the side surfaces 65 will break, and that the regions of the side surfaces 65 that do not face the opening portions 78L, 78R will greatly deform and these regions will break.

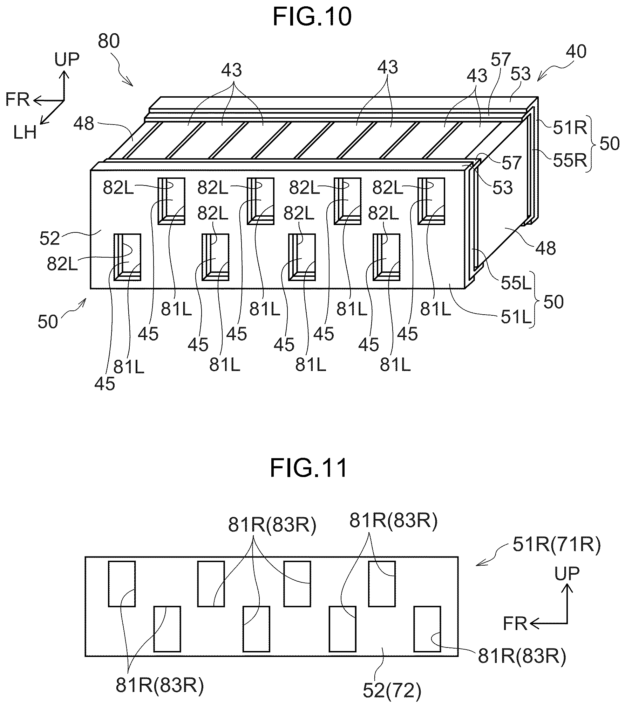

A second embodiment of the present disclosure is described next with reference to Fig. 10 through Fig. 14. Note that members that are the same as the first embodiment merely are denoted by the same reference numerals, and detailed description thereof is omitted.

In a battery pack 80 of the second embodiment, the structures of the restraining members 50 of the battery module 40 and the restraining members 70 of the battery module 60 differ from the first embodiment.

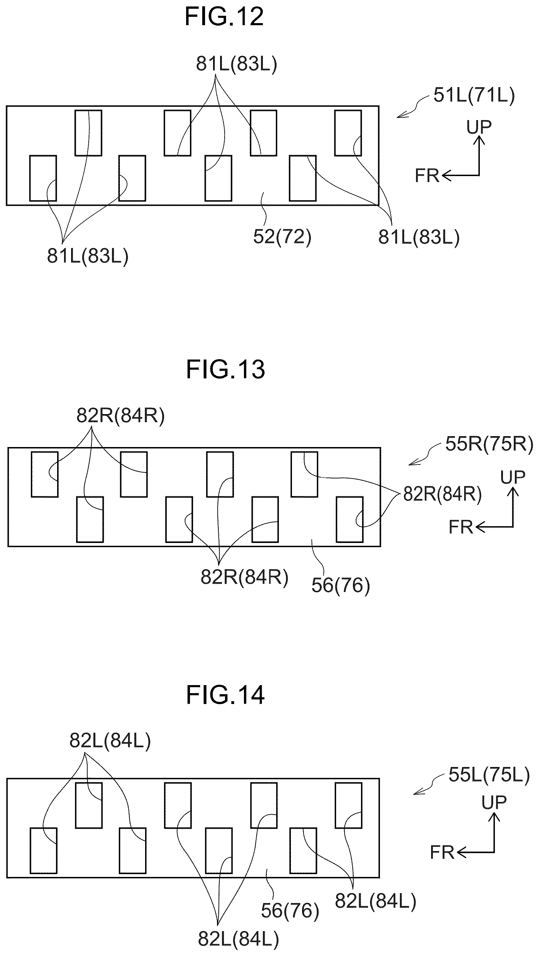

As illustrated in Fig. 10 through Fig. 12, instead of the through-hole 54R, through-holes (first through-holes) 81R, the number of which corresponds to that of the battery cells 43, are formed in the restraining plate 51R of the restraining member 50 of the battery module 40. The shape, as seen in a side view, of each of the through-holes 81R is a rectangular shape whose vertical dimension is greater than the front-rear dimension thereof. The front-rear dimension of each through-hole 81R is substantially the same as that of the battery cell (the cell case 44), and the vertical dimension of the through-hole 81R is shorter than that of the battery cell 43 (the cell case 44). Further, the vertical positions of the through-holes 81R that are adjacent to one another differ from one another. Namely, the plural through-holes 81R that are provided in the lower half portion of the base plate portion 52, and the plural through-holes 81R that are provided in the upper half portion of the base plate portion 52, are formed in the restraining plate 51R. Moreover, instead of the through-hole 54L, through-holes (first through-holes) 81L, the number of which corresponds to that of the battery cells 43, are formed in the restraining plate 51L. The shapes, as seen in a side view, of the through-holes 81L are the same as those of the through-holes 81R. The vertical positions of the through-holes 81L that are adjacent to one another differ from one another. Namely, the plural through-holes 81L that are provided in the lower half portion of the base plate portion 52, and the plural through-holes 81L that are provided in the upper half portion of the base plate portion 52, are formed in the restraining plate 51L. Moreover, as illustrated in Fig. 11 and Fig. 12, the vertical direction positions of the respective through-holes 81R and the respective through-holes 81L that are at the same left-right direction positions when the restraining plates 51R, 51L are viewed from the left side differ from one another.

As illustrated in Fig. 13 and Fig. 14, instead of the opening portion 58R, opening portions (first opening portions) 82R, the number of which corresponds to that of the battery cells 43, are formed in the cover member 55R of the restraining member 50 of the battery module 40. The shapes, as seen in a side view, of the respective opening portions 82R are the same as those of the through-holes 81R. The vertical positions of the opening portions 82R that are adjacent to one another differ from one another. Namely, the plural opening portions 82R that are provided in the lower half portion of the base plate portion 56, and the plural opening portions 82R that are provided in the upper half portion of the base plate portion 56, are formed in the cover member 55R. The positional relationships of the respective opening portions 82R of the cover member 55R are the same as the positional relationships of the respective through-holes 81R of the restraining plate 51R.

Instead of the opening portion 58L, opening portions (first opening portions) 82L, the number of which corresponds to that of the battery cells 43, are formed in the cover member 55L. The shapes, as seen in a side view, of the respective opening portions 82L are the same as those of the opening portions 82R. The vertical positions of the opening portions 82L that are adjacent to one another differ from one another. Namely, the plural opening portions 82L that are provided in the lower half portion of the base plate portion 56, and the plural opening portions 82L that are provided in the upper half portion of the base plate portion 56, are formed in the cover member 55L. The positional relationships of the respective opening portions 82L of the cover member 55L are the same as the positional relationships of the respective through-holes 81L of the restraining plate 51L.

As illustrated in Fig. 10, in the same way as in the first embodiment, the restraining plate 51R and the cover member 55R are fixed together, and the restraining plate 51L and the cover member 55L are fixed together. Therefore, the entire outer peripheral edges of the respective through-holes 81R of the restraining plate 51R and the entire outer peripheral edges of the respective opening portions 82R of the cover member 55R face one another in the left-right direction. The entire outer peripheral edges of the respective through-holes 81L of the restraining plate 51L and the entire outer peripheral edges of the respective opening portions 82L of the cover member 55L face one another in the left-right direction. Moreover, when the left and right restraining members 50 are made integral with the battery stack 41 and the end plates 48, the respective through-holes 81R, 81L and the respective opening portions 82R, 82L face, in the left-right direction, the side surfaces 45 of the cell cases 44 of the corresponding battery cells 43, respectively. Namely, as seen in a side view, the left side edge portions of the respective through-holes 81R, 81L and the respective opening portions 82R, 82L substantially overlap the left side edge portions of the side surfaces 45, 65 of the corresponding cell cases 44, 64. Further, as seen in a side view, the right side edge portions of the respective through-holes 81R, 81L and the respective opening portions 82R, 82L substantially overlap the right side edge portions of the side surfaces 45, 65 of the corresponding cell cases 44, 64.

Further, as illustrated in Fig. 11 through Fig. 14, the restraining plate 71R of the right-side restraining member 70 of the battery module 60 has the same structure as the restraining plate 51R, and the cover member 75R has the same structure as the cover member 55R. Namely, plural through-holes (second through-holes) 83R corresponding to the through-holes 81R are formed in the restraining plate 71R, and plural opening portions (second opening portions) 84R corresponding to the opening portions 82R are formed in the cover member 75R. Further, the restraining plate 71L of the left-side restraining member 70 of the battery module 60 has the same structure as the restraining plate 51L, and the cover member 75R has the same structure as the cover member 55R. Namely, plural through-holes (second through-holes) 83L that correspond to the through-holes 81L are formed in the restraining plate 71L, and plural opening portions (second opening portions) 84L corresponding to the opening portions 82L are formed in the cover member 75L.

Therefore, the battery pack 80 of the second embodiment also can exhibit operation and effects that are similar to those of the battery pack 20 of the first embodiment.

Moreover, at the restraining plates 51L, 51R of the battery pack 80, the through-holes 81L, 81R that correspond to the respective battery cells 43 are formed in the base plate portions 52 in states of being separated from (independent of) one another. Further, at the cover members 55L, 55R of the battery pack 80, the opening portions 82L, 82R that correspond to the respective battery cells 43 are formed in the base plate portions 56 in states of being separated from (independent of) one another. Therefore, for example, in a case in which high-temperature debris that is ejected from the left-side side surface 45 of the cell case 44 of any of the battery cells 43 is ejected toward the left side from the opening portion 82L of the cover member 55L and the through-hole 81L of the restraining plate 51L that face that side surface 45, there is little concern that the debris will head from the outer side of the restraining plate 51L and the cover member 55L via the another through-hole 81L and opening portion 82L toward another battery cell 43 and will stick to that battery cell 43. Therefore, when one of the battery cells 43 of the battery module 40 overheats, the battery pack 80 can, more reliably than the battery pack 20, suppress the occurrence of thermal runaway at the battery module 40. Similarly, when one of the battery cells 63 of the battery module 60 overheats, the battery pack 80 can, more reliably than the battery pack 20, suppress the occurrence of thermal runaway at the battery module 60.

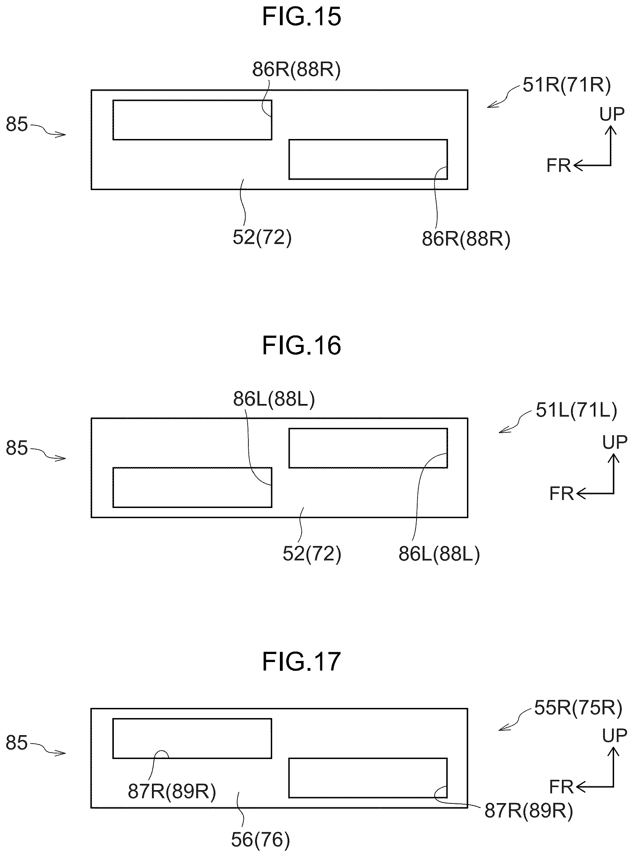

A third embodiment of the present disclosure is described next with reference to Fig. 15 through Fig. 18. Note that members that are the same as the first embodiment merely are denoted by the same reference numerals, and detailed description thereof is omitted.

In a battery pack 85 of the third embodiment, the structures of the restraining members 50 of the battery module 40 and the restraining members 70 of the battery module 60 differ from the first embodiment and the second embodiment.

As illustrated in Fig. 15 through Fig. 18, instead of the through-hole 54R, two through-holes (first through-holes) 86R are formed in the restraining plate 51R of the restraining member 50 of the battery module 40. The shape, as seen in a side view, of each of the through-holes 86R is a rectangular shape whose front-rear dimension is greater than the vertical dimension thereof. The front-rear dimension of each through-hole 86R is greater than that of the battery cell 43 (the cell case 44), and the vertical dimension of each through-hole 86R is shorter than that of the battery cell 43 (the cell case 44). The vertical positions of the through-holes 86R differ from one another. Namely, the one through-hole 86R that is provided in the lower half portion of the base plate portion 52, and the one through-hole 86R that is provided in the upper half portion of the base plate portion 52, are formed in the restraining plate 51R. Further, instead of the through-hole 54L, two through-holes (first through-holes) 86L are formed in the restraining plate 51L. The shapes, as seen in a side view, of the through-holes 86L are the same as those of the through-holes 86R. The vertical positions of the through-holes 86L differ from one another. Namely, the one through-hole 86L that is provided in the lower half portion of the base plate portion 52, and the one through-hole 86L that is provided in the upper half portion of the base plate portion 52, are formed in the restraining plate 51L. Moreover, as illustrated in Fig. 15 and Fig. 16, the vertical direction positions of the respective through-holes 86R and the respective through-holes 86L, which are at the same left-right direction positions when the restraining plates 51R, 51L are viewed from the left side, differ from one another.

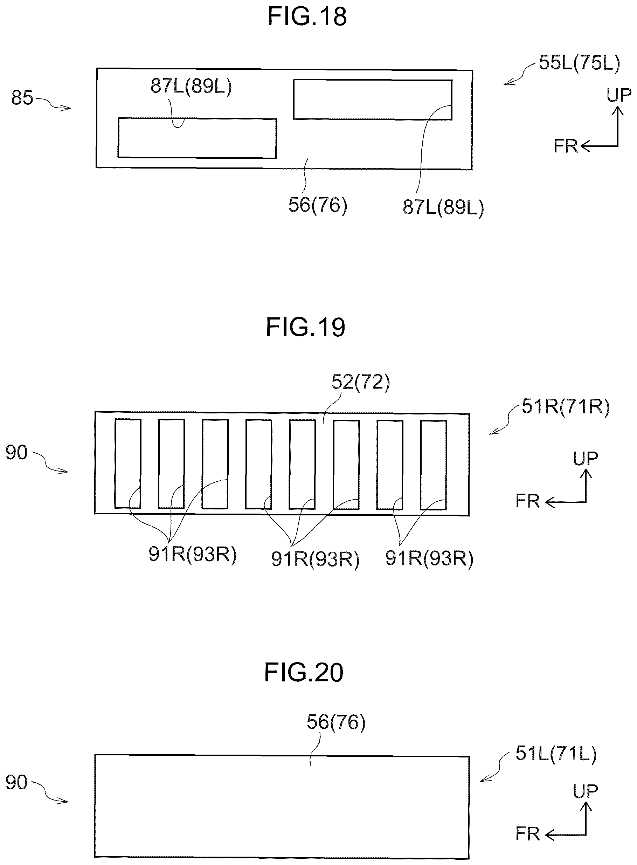

As illustrated in Fig. 17 and Fig. 18, instead of the opening portion 58R, two opening portions (first opening portions) 87R are formed in the cover member 55R of the restraining member 50 of the battery module 40. The shapes, as seen in a side view, of the respective opening portions 87R are the same as those of the through-holes 86R. The vertical positions of the opening portions 87R differ from one another. Namely, the one opening portion 87R that is provided in the lower half portion of the base plate portion 56, and the one opening portion 87R that is provided in the upper half portion of the base plate portion 56, are formed in the cover member 55R. The positional relationships of the respective opening portions 87R of the cover member 55R are the same as the positional relationships of the respective through-holes 86R of the restraining plate 51R.

Instead of the opening portion 58L, two opening portions (first opening portions) 87L are formed in the cover member 55L. The shapes, as seen in a side view, of the respective opening portions 87L are the same as those of the opening portions 87R. The vertical positions of the opening portions 87L differ from one another. Namely, the one opening portion 87L that is provided in the lower half portion of the base plate portion 56, and the one opening portion 87L that is provided in the upper half portion of the base plate portion 56, are formed in the cover member 55L. The positional relationships of the respective opening portions 87L of the cover member 55L are the same as the positional relationships of the respective through-holes 86L of the restraining plate 51L.

In the battery pack 85 as well, in the same way as in the first embodiment, the restraining plate 51R and the cover member 55R are fixed together, and the restraining plate 51L and the cover member 55L are fixed together. Therefore, the entire outer peripheral edges of the respective through-holes 86R of the restraining plate 51R and the entire outer peripheral edges of the respective opening portions 87R of the cover member 55R face one another in the left-right direction. The entire outer peripheral edges of the respective through-holes 86L of the restraining plate 51L and the entire outer peripheral edges of the respective opening portions 87L of the cover member 55L face one another in the left-right direction. Moreover, when the left and right restraining members 50 are made integral with the battery stack 41 and the end plates 48, the rear-side through-hole 86R of the restraining plate 51R and the rear-side opening portion 87R of the cover member 55R face, in the left-right direction, the lower portions of the right-side side surfaces 45 of the plural battery cells 43 that are positioned at the rear, and the front-side through-hole 86R of the restraining plate 51R and the front-side opening portion 87R of the cover member 55R face, in the left-right direction, the upper portions of the right-side side surfaces 45 of the plural battery cells 43 that are positioned at the front. Further, the rear-side through-hole 86L of the restraining plate 51L and the rear-side opening portion 87L of the cover member 55L face, in the left-right direction, the upper portions of the left-side side surfaces 45 of the plural battery cells 43 positioned at the rear, and the front-side through-hole 86L of the restraining plate 51L and the front-side opening portion 87L of the cover member 55L face, in the left-right direction, the lower portions of the left-side side surfaces 45 of the plural battery cells 43 positioned at the front.

Further, as illustrated in Fig. 15 through Fig. 18, the restraining plate 71R of the right-side restraining member 70 of the battery module 60 has the same structure as the restraining plate 51R, and the cover member 75R has the same structure as the cover member 55R. Namely, plural through-holes (second through-holes) 88R corresponding to the through-holes 86R are formed in the restraining plate 71R, and plural opening portions (second opening portions) 89R corresponding to the opening portions 87R are formed in the cover member 75R. Further, the restraining plate 71L of the left-side restraining member 70 of the battery module 60 has the same structure as the restraining plate 51L, and the cover member 75R has the same structure as the cover member 55L. Namely, plural through-holes (second through-holes) 88L that correspond to the through-holes 86L are formed in the restraining plate 71L, and plural opening portions (second opening portions) 89L corresponding to the opening portions 87L are formed in the cover member 75L.

Therefore, the battery pack 85 of the third embodiment also can exhibit operation and effects that are similar to those of the battery pack 20 of the first embodiment.

A fourth embodiment of the present disclosure is described next with reference to Fig. 19 through Fig. 22. Note that members that are the same as the first embodiment merely are denoted by the same reference numerals, and detailed description thereof is omitted.

In a battery pack 90 of the fourth embodiment, the structures of the restraining members 50 of the battery module 40 and the restraining members 70 of the battery module 60 differ from the first through third embodiments.

As illustrated in Fig. 19, instead of the through-hole 54R, through-holes (first through-holes) 91R, the number of which corresponds to that of the battery cells 43, are formed in the restraining plate 51R of the restraining member 50 of the battery module 40. The front-rear widths, as seen in side view, of the respective through-holes 91R are shorter than those of the side surfaces 45 of the battery cells 43, and the vertical widths, as seen in a side view, of the respective through-holes 91R are shorter than those of the side surfaces 45 of the battery cells 43. On the other hand, as illustrated in Fig. 20, no through-holes corresponding to the through-hole 54L are formed in the restraining plate 51L.

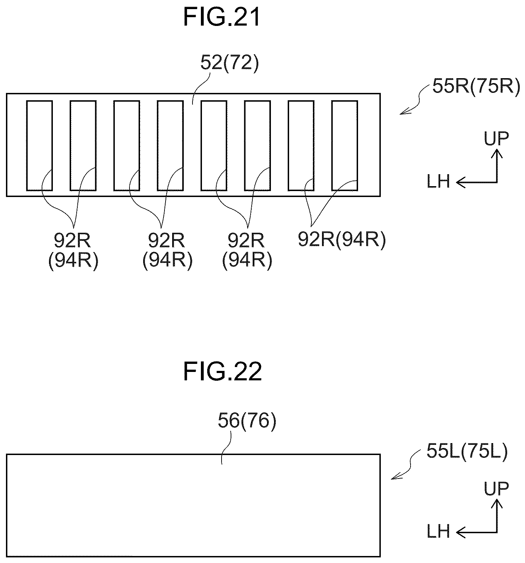

Moreover, as illustrated in Fig. 21, instead of the opening portion 58R, opening portions (first opening portions) 92R, the number of which corresponds to that of the battery cells 43, are formed in the cover member 55R of the restraining member 50 of the battery module 40. The shapes, as seen in a side view, of the respective opening portions 92R are the same as those of the through-holes 91R. The positional relationships of the respective opening portions 92R of the cover member 55R are the same as the positional relationships of the respective through-holes 91R of the restraining plate 51R. On the other hand, as illustrated in Fig. 22, no through-holes corresponding to the opening portion 58L are formed in the cover member 55L.

In the battery pack 90 as well, in the same way as in the first embodiment, the restraining plate 51R and the cover member 55R are fixed together, and the restraining plate 51L and the cover member 55L are fixed together. Therefore, the entire outer peripheral edges of the respective through-holes 91R of the restraining plate 51R and the entire outer peripheral edges of the respective opening portions 92R of the cover member 55R face one another in the left-right direction. Further, when the left and right restraining members 50 are made integral with the battery stack 41 and the end plates 48, the respective through-holes 91R of the restraining plate 51R and the respective opening portions 92R of the cover member 55R face, in the left-right direction, portions of the right-side side surfaces 45 of the cell cases 44 of the battery cells 43, respectively. Further, the cover member 55L faces, in the left-right direction, the entireties of the left-side side surfaces 45 of the respective battery cells 43.

Further, as illustrated in Fig. 19 through Fig. 22, the restraining plate 71R of the right-side restraining member 70 of the battery module 60 has the same structure as the restraining plate 51R, and the cover member 75R has the same structure as the cover member 55R. Namely, plural through-holes (second through-holes) 93R corresponding to the through-holes 91R are formed in the restraining plate 71R, and plural opening portions (second opening portions) 94R corresponding to the opening portions 92R are formed in the cover member 75R. Further, the restraining plate 71L of the left-side restraining member 70 of the battery module 60 has the same structure as the restraining plate 51L, and the cover member 75L has the same structure as the cover member 55L. Namely, through-holes are not formed in the restraining plate 71L and the cover member 75L.

Therefore, for example, when one of the battery cells 43 of the battery module 40 overheats, a portion (the region facing the through-hole 91R and the opening portion 92R) of the right-side side surface 45 of the cell case 44 of that battery cell 43 deforms toward the outer side, and the high-temperature debris within that cell case 44 heads from the broken portion of the right-side side surface 45 toward the right side of the right-side restraining member 50 via the opening portion 92R and the through-hole 91R. However, no through-holes are formed in the restraining plate 71L and the cover member 75L of the left-side restraining member 70. Therefore, the debris sticks to the restraining plate 71L of the left-side restraining member 70 and cannot reach the battery cell 63 that is positioned further toward the right side than the restraining plate 71L and the cover member 75L. Thus, the battery pack 90 of the fourth embodiment also can exhibit operation and effects that are similar to those of the battery pack 20 of the first embodiment.

Although battery packs relating to embodiments have been described above, appropriate changes can be made to the designs thereof within a scope that does not depart from the gist of the present disclosure.

For example, the restraining members 50 do not have to have the cover members 55L, 55R. Further, the restraining members 70 do not have to have the cover members 75L, 75R.

The battery pack may include three or more battery modules that are lined-up in one direction.

The stacking direction of the respective battery cells in the battery pack (the direction in which the battery module extends) may be a direction different than the longitudinal direction. Further, the direction in which the battery modules are lined-up may be a direction different than the left-right direction.

The shapes of the through-holes formed in the restraining plates and the shapes of the opening portions formed in the cover members may be shapes that are different than those of the above-described respective embodiments.

The vehicle may be an electric vehicle that is different than a battery electric vehicle and that is equipped with an electric motor utilizing the electric power of the battery device 20. For example, the vehicle may be a hybrid electric vehicle (HEV) or a plug-in hybrid electric vehicle (PHEV).

## Claims

1. A battery pack, comprising:
a first battery module having a plurality of first battery cells that are stacked in a predetermined first direction and have first cell cases, a pair of first end plates sandwiching the first battery cells in the first direction, and a pair of first restraining plates connected to the pair of first end plates and positioned at respective sides of the first battery cells along a second direction that is orthogonal to the first direction; and
a second battery module having a plurality of second battery cells that are stacked in the first direction and have second cell cases, a pair of second end plates sandwiching the second battery cells in the first direction, and a pair of second restraining plates connected to the pair of second end plates and positioned at respective sides of the second battery cells along the second direction, wherein:
at least one first through-hole, which faces at least one of the first battery cells, is formed in the first restraining plate that faces the second battery module, and
at least one second through-hole, which faces at least one of the second battery cells and faces a region of the first restraining plate in which the first through-hole is not formed, is formed in the second restraining plate that faces the first battery module.

2. The battery pack of claim 1, wherein:
the first cell cases are rectangular parallelopiped-shaped,
the pair of first restraining plates and entireties of pairs of side surfaces of the first cell cases face one another in the second direction,
the second cell cases are rectangular parallelopiped-shaped, and
the pair of second restraining plates and entireties of pairs of side surfaces of the second cell cases face one another in the second direction.

3. The battery pack of claim 2, wherein:
the first battery module has a pair of first cover members that are made of resin and are respectively positioned between the pair of first restraining plates that are made of metal and the pairs of side surfaces of the first cell cases, and
first opening portions, which face the first through-holes of the first restraining plates, are formed in the first cover members.

4. The battery pack of claim 3, wherein the pair of first cover members have pairs of first nipping portions that nip the first cell cases from a third direction that is orthogonal to the first direction and the second direction.

5. The battery pack of claim 3 or claim 4, wherein the first through-holes and the first opening portions that face one another have identical shapes.

6. The battery pack of claim 2, wherein:
the second battery module has a pair of second cover members that are made of resin and are respectively positioned between the pair of second restraining plates that are made of metal and the pairs of side surfaces of the second cell cases, and
second opening portions, which face the second through-holes of the second restraining plates, are formed in the second cover members.

7. The battery pack of claim 6, wherein the pair of second cover members have pairs of second nipping portions that nip the second cell cases from a third direction that is orthogonal to the first direction and the second direction.

8. The battery pack of claim 6 or claim 7, wherein the second through-holes and the second opening portions that face one another have identical shapes.
